# EUROPEAN PATENT APPLICATION

(11) **EP 1 544 247 A1**
(43) Date of publication of application: **22.06.2005**
(21) Application number: 03748567.9
(22) Date of filing: 24.09.2003
(51) Int. Cl.: C08L 45/00, C08L 65/00, C08K 7/04

(54) **ALICYCLIC STRUCTURE CONTAINING POLYMER RESIN COMPOSITION AND FORMED ARTICLE**

(30) Priority: 26.09.2002 JP 2002280578
(71) Applicant: Zeon Corporation, Tokyo 100-8323 (JP)
(72) Inventor: TADA, Mitsushi, c/o ZEON CORPORATION, Tokyo 100-8323 (JP)
(74) Representative: VOSSIUS & PARTNER
(86) International application number: PCT/JP2003/012137
(87) International publication number: WO 2004/029152

(57) **Abstract**

A resin composition, containing a polymer (A) containing an alicyclic structure and carbon nanotube (B) having a fiber diameter from 0.5 to 300 nm and a fiber length from 0.01 to 300 µm, wherein A/B, the ratio (weight ratio) of the polymer (A) containing an alicyclic structure to carbon nanotube (B), is 100/0.01 to 100/20. According to the present invention, it is possible to provide a resin composition having excellent conductivity and low outgassing while maintaining preferable characteristics (moldability, heat resistance and mechanical strength) of a polymer containing an alicyclic structure, and a molded article formed by the resin composition.

## Description

### TECHNICAL FIELD

The present invention relates to a resin composition which is excellent in conductivity, low outgassing, moldability, heat resistance and mechanical strength, and a molded article formed by the resin composition.

### BACKGOUND ART

For a resin container for wrapping, holding or conveying an electronic device, α-olefin (co)polymers, such as polystyrene and polypropylene, have been conventionally used.

By the way, generally, when holding an electronic device in a charged container, etc., its characteristics may change due to the charging voltage. Also, in the case of an electric or electronic apparatus, a problem of an erroneous operation due to electromagnetic wave from the outside, or inversely, a problem of causing an erroneous operation of other apparatuses due to generated electromagnetic wave may be caused. Therefore, by blending a conductive filler to the above polystyrene or α-olefin (co)polymer, prevention of electrification and shielding of electromagnetic wave are attained.

However, an electronic device held in a container is often exposed to a high temperature recently, and high heat resistance has been required to the container for holding an electronic device itself. Conventionally used polystyrene and α-olefin (co)polymer generally have a low melting point and cannot fulfill the demand for high heat resistance.

Also, electronic devices are mainly produced in an unmanned process, and high dimensional accuracy is required to containers, for holding electronic devices and being fed on the line in such a process.

However, it is difficult to produce a container having high enough dimensional accuracy for an unmanned process from conventional α-olefin (co)polymers.

On the other hand, a norbornene based polymer and other polymers containing an alicyclic structure have characteristics that the glass transition temperature is higher, the light transmittance is higher, and the birefringence is lower, etc. than that of thermoplastic resins used for optical use. Therefore, it is focused as translucent thermoplastic resin having excellent heat resistance, translucency, and optical characteristics, and the utilization has been spread in many areas.

However, since polymers containing an alicyclic structure are inherently insulators, various studies have been tried to improve conductivity of the polymers.

For example, the patent article 1 below discloses a cyclic olefin based resin composition characterized by being composed of a cyclic olefin based polymer, sodium alkylsulfonate having an alkyl group having a carbon number of 8 to 22 and/or sodium alkylsulfonate having an alkyl group having a carbon number of 8 to 22.

Also, the patent article 2 below discloses a resin composition characterized by being composed of any one of cyclic olefin based polymers of an ethylene-cyclic olefin random copolymer having a softening temperature of 70°C or higher, a specific cyclic olefin ring-opening polymer and hydrogenates of the ring-opening polymers, and 5 to 100 wt% of a conductive filler with respect to 100 wt% of the resin component.

Also, the patent article 3 below discloses an antistatic translucent resin molded article having an antistatic inside and/or the surface, and the total light transmittance is 85% or higher in the molded article of a thermoplastic resin having a norbornane skeleton.

Furthermore, the patent article 4 below discloses a thermoplastic resin composition characterized by containing a cyclic polyolefin based resin and a (partial) ester of a polyhydric alcohol condensate with a saturated fatty acid.

However, it was found that, when using the resin compositions disclosed in the respective patent articles for, for example, a container for holding a precision substrate, such as a silicon wafer, a mask plate, a photomask, a magnetic disk substrate and a liquid crystal display substrate, and a fluorescence measuring tray for a DNA chip substrate and a fluorescent plate, etc., there are problems that desorption of a filler is caused, conductivity becomes insufficient, elution of a gas and ion is caused, furthermore, resin characteristics of the original polymer containing an alicyclic structure are impaired (for example, a decline in moldability (fluidity), a decline in mechanical strength and a decline in surface smoothness), etc.

The patent article 1: The Japanese Unexamined Patent Publication No. 5-9351

The patent article 2: The Japanese Unexamined Patent Publication No. 5-156100

The patent article 3: The Japanese Unexamined Patent Publication No. 7-252404

The patent article 4: The Japanese Unexamined Patent Publication No. 2000-53846

### DISCLOSURE OF THE INVENTION

An object of the present invention is to provide a resin composition having excellent conductivity and low outgassing while maintaining preferable characteristics (moldability, heat resistance and mechanical strength) of a polymer containing an alicyclic structure. Another object of the present invention is to provide a molded article formed by the resin composition.

The present inventors have been committed themselves to study, found that the above objects can be attained by using a resin composition composed of a polymer containing an alicyclic structure and carbon nanotube, furthermore, proceeded the study based on the knowledge, and completed the present invention.

Namely, according to the present invention, there is provided a resin composition, containing a polymer (A) containing an alicyclic structure and carbon nanotube (B) having a fiber diameter from 0.5 to 300 nm and a fiber length from 0.01 to 300 µm, wherein A/B, the ratio (weight ratio) of the polymer (A) containing an alicyclic structure to carbon nanotube (B), is 100/0.01 to 100/20.

Preferably, the polymer (A) containing an alicyclic structure is a norbornene based polymer.

Preferably, the polymer (A) containing an alicyclic structure is a hydrogenated ring-opening polymer of a norbornene based monomer.

Preferably, the polymer (A) containing an alicyclic structure has a glass transition temperature of 60°C or higher.

According to the present invention, there is provided a molded article obtained by molding any one of the above resin compositions.

The molded article has surface resistance of 10¹² Ω/□ or less.

The molded article is preferably a container for holding a precision substrate or a biological testing vessel.

### BEST MODE FOR CARRYING OUT THE INVENTION

A resin composition of the present invention is composed of a polymer (A) containing an alicyclic structure and carbon nanotube (B).

The polymer (A) containing an alicyclic structure used in the present invention contains an alicyclic structure in its principal chain and/or side chain and preferably contains the alicyclic structure in the principal chain in terms of the mechanical strength and heat resistance, etc.

As the alicyclic structure of a polymer, a saturated cyclic hydrocarbon (cycloalkane) structure and an unsaturated cyclic hydrocarbon (cycloalkene) structure, etc. may be mentioned. In terms of the mechanical strength and heat resistance etc., the cycloalkane structure and cycloalkene structure are preferable, and the cycloalkane structure is the most preferable among them. The number of carbons composing the alicyclic structure is not particularly limited, but when in a range of normally 4 to 30, preferably 5 to 20, and more preferably 5 to 15, characteristics of the mechanical strength, heat resistance and moldability of a film are highly balanced and preferable. The ratio of the repeating units formed by containing the alicyclic structure in the polymer containing an alicyclic structure may be suitably selected in accordance with the use object, and is preferably 50 wt% or more, more preferably 70 wt% or more, and particularly preferably 90 wt% or more. When the ratio of the repeating units formed by containing the alicyclic structure in the polymer containing an alicyclic structure is in the ranges, it is preferable in terms of translucency and heat resistance of a molded article.

As a specific example of the polymer containing an alicyclic structure, for example, (1) a norbornene based polymer (2) a monocyclic cyclic olefin based polymer, (3) a cyclic conjugated diene based polymer, (4) a vinyl alicyclic hydrocarbon based polymer, and hydrogenates of (1) to (4), etc. may be mentioned. Among these, in terms of heat resistance and mechanical strength, etc., hydrogenate of a norbornene based polymer, a vinyl alicyclic hydrocarbon polymer and the hydrogenate are preferable.

### (1) Norbornene based polymer

As a norbornene based polymer, a ring-opening polymer of a norbornene based monomer, a ring-opening copolymer of a norbornene based monomer and other monomer capable of performing ring-opening copolymerization with the same, and hydrogenates of these; and an addition copolymer of an addition polymer of a norbornene based monomer and a norbornene based monomer with other monomer capable of copolymerizng with the same, etc. may be mentioned. Among these, in terms of heat resistance and mechanical strength, etc., a hydrogenated ring-opening polymer of a norbornene based monomer is the most preferable.

As a norbornene based monomer, bicyclo[2.2.1]hept-2-ene (trivial name: norbornene) and the derivative (those having a substituent in the ring), tricyclo[4.3.0.1^{2,5}]deca-3,7-diene (trivial name: dicyclopentadiene) and the derivative, 7,8-benzotricyclo[4.3.0.1^{2,5}]deca-3-ene (Also called as 1,4-methano-1,4,4a,9a-tetrahydrofluorene. trivial name: methanotetrahydrofluorene) and the derivative, tetracyclo[4.4.0.1^{2,5}.1^{7,10}]dodeca-3-ene (trivial name: tetracyclo dodecen) and the derivative, etc. may be mentioned.

As a substituent, an alkyl group, an alkylene group, a vinyl group, and an alkoxycarbonyl group, etc. may be mentioned, and the above norbornene based monomer may contain two or more kinds of these. Specifically, 8-methyl-tetracyclo[4.4.0.1^{2,5}.1^{7,10}]-dodeca-3-ene, 8-ethyl-tetracyclo[4.4.0.1^{2,5}.1^{7,10}]-dodeca-3-ene, 8-methylidene-tetracyclo[4.4.0.1^{2,5}.1^{7,10}]-dodeca-3-ene, 8-ethylidene-tetracyclo[4.4.0.1^{2,5}.1^{7,10}]-dodeca-3-ene, 8-methoxycarbonyl-tetracyclo[4.4.0.1^{2,5}.1^{7,10}]-dodeca-3-ene, 8-methyl-8-methoxycarbonyl-tetracyclo[4.4.0.1^{2,5}.1^{7,10}]-dodeca-3-ene, etc. may be mentioned.

These norbornene based monomers are used alone or in combination of two or more kinds.

Ring-opening polymers of these norbornene based monomers or a ring-opening copolymer of a norbornene based monomer and other monomer capable of performing ring-opening copolymerization with these can be obtained by polymerizing monomer components in the presence of a well known ring-opening polymerization catalyst. As a ring-opening polymerization catalyst; for example; a catalyst composed of a halide of a metal such as ruthenium and osmium, nitrite salt or an acetylacetone compound, and a reducing agent; or a catalyst composed of a halide or acetylacetone compound of a metal such as titanium, zirconium, tungsten and molybdenum, and an organic aluminum compound; may be used.

As other monomer capable of performing ring-opening copolymerization with a norbornene based monomer, for example, cyclohexene, cycloheptene, cyclooctene and other monocyclic cyclic olefin based monomers, etc. may be mentioned.

A ring-opening polymer hydrogenate of a norbornene based monomer can be normally obtained by adding a well known hydrogenation catalyst containing transition metal, such as nickel, palladium, to a polymerization solution of the above ring-opening polymer and hydrogenating carbon-carbon unsaturated bonds.

An addition polymer of a norbornene based monomer or an addition (co)polymer of a norbornene based monomer and other monomer capable of copolymerizing with the same can be obtained by performing (co)polymerization on these monomers by using a well-known addition polymerization catalyst, for example, a catalyst composed of titanium, zirconium or a vanadium compound and an organic aluminum compound.

As other monomer capable of performing addition copolymerization with a norbornene based monomer, for example, ethylene, propyrene, 1-butene, 1-pentene, 1-hexene and other α-olefin having a carbon number of 2 to 20, and hydrogenates of these; cyclobutene, cyclopentene, cyclohexene, cyclooctene, 3a,5,6,7a-tetrahydro-4,7-methano-1H-indene and other cycloolefin, and derivatives of these; 1,4-hexadiene, 4-methyl-1,4-hexadiene, 5-methyl-1,4-hexadiene, 1,7-octadiene and other nonconjugated dienes; etc. may be used. Among these, α-olefin, particularly, ethylene is preferable.

These other monomers capable of copolymerizing with a norbornene based monomer may be used alone or in combination with two or more kinds. When copolymerizing a norbornene based monomer with other monomer capable of copolymerizing with the same, they are suitably selected, so that the ratio of structure units originating from a norbornene based monomer and structure units originating from the copolymerizable other monomer in the copolymer becomes in a range of normally 30:70 to 99:1, preferably 50:50 to 97:3, and more preferably 70:30 to 95:5 in the weight ratio.

### (2) Monocyclic cyclic olefin based polymer

As a monocyclic cyclic olefin based polymer, for example, addition polymers of cyclohexene, cycloheptene, cyclooctene and other cyclic olefin based monomers can be used.

### (3) Cyclic conjugated diene based polymer

As a cyclic conjugated diene based polymer, for example, a polymer obtained by performing 1,2- or 1,4-addition polymerization on cyclopentadiene, cyclohexadiene and other cyclic conjugated diene based monomers, and the hydrogenates, etc. may be used.

### (4) Vinyl alicyclic hydrocarbon polymer

As a vinyl alicyclic hydrocarbon polymer, for example, polymers of vinylcyclohexene, vinylcyclohexane and other vinyl alicyclic hydrocarbon based monomers and the hydrogenates; hydrogenates of an aromatic ring part of polymers of vinyl aromatic based monomers, such as styrene and α-methylstyrene; etc. may be mentioned. It may be any of copolymers, such as a random copolymer and a block copolymer, of a vinyl alicyclic hydrocarbon polymer and a vinyl aromatic based monomer with other monomer capable of copolymerizing with these monomers, and the carbon-carbon double bonds (including aromatic ring part) hydrogenates, etc. As a block copolymer, diblock, triblock or multiblock and a tapared block copolymers, etc. may be mentioned and is not particularly limited.

In the structures formed by containing an alicyclic structure in the polymer containing an alicyclic structure, the ratio of repeating units formed by containing an alicyclic structure not having a norbornane ring is preferably 10 wt% or more, more preferably 30 wt% or more, and particularly preferably 50 wt% or more. The larger the ratio of the repeating units formed by containing an alicyclic structure not having a norbornane ring, the more preferable because the moisture proof property and the mechanical strength become excellent particularly after thermal contraction.

Among them, a hydrogenated ring-opening polymer of a norbornene based monomer having repeating units formed by containing an alicyclic structure not having a norbornane ring within the above ranges is preferable.

In the case of a hydrogenated ring-opening polymer, as a monomer having repeating units formed by containing an alicyclic structure not having a norbornane ring, norbornene (including those having a substituent); a norbornene based monomer wherein a norbornene ring and a ring other than a norbornene ring, for example five-membered ring and an aromatic ring, are bonded; may be mentioned. As a norbornene based monomer wherein a norbornene ring and a ring other than a norbornene ring, for example five-membered ring and an aromatic ring, are bonded, tricyclo[4.3.0.1^{2,5}]deca-3,7-diene (trivial name: dicyclopentadiene) and the derivative (those having a substituent in the ring), 7,8-benzotricyclo[4.3.0.1^{2,5}]deca-3-ene (Also called as 1,4-methano-1,4,4a,9a-tetrahydrofluorene. trivial name: methanotetrahydrofluorene) and the derivative may be mentioned.

Molecular weight of a polymer containing an alicyclic structure may be suitably selected in accordance with the use object and, in weight average molecular weight in terms of polyisoprene or polystyrene measured by gel permeation chromatography of a cyclohexane solution (a toluene solution when the polymer is not dissolved), when in a range of normally 5,000 to 500,000, preferably 8,000 to 250,000, more preferably 10,000 to 200,000, it is preferable because the mechanical strength and moldability of the resin is highly balanced.

A glass transition temperature (Tg) of the polymer containing an alicyclic structure is in a range of preferably 60°C or higher, and more preferably in a range of 90°C to 170°C. By setting the glass transition temperature of the polymer containing an alicyclic structure to be in the above ranges, a molded article having excellent durability, wherein deformation and stress are not caused even when used under a high temperature, can be obtained. When the glass transition temperature of the polymer containing an alicyclic structure is lower than the above lower limit temperature, a problem is liable to be caused in terms of heat resistance, while when exceeding the upper limit temperature, the workability tends to decline.

A carbon nanotube (B) used in the present invention is a material having a single-layer structure, wherein a carbon hexagonal net surface is closed to be a cylinder shape, or a multilayer structure, wherein the cylindrical structures are arranged to be nested. It may be configured only by the single-layer structure or only by the multilayer structure, alternately, the single-layer structure and the multilayer structure may be mixed. Also, a carbon material partially having the carbon nanotubetructure can be also used. It may be also called by the name of graphite fibrillated nanotube and graphite nanofiber, etc. other than the name of carbon nanotube.

The carbon nanotube can be produced, for example, by a method of bringing arc discharge between carbon electrodes to grow on the cathode surface of the discharging electrode, a method of irradiating a laser beam to silicone carbide to heat and sublime, and a method of using a transition metal based catalyst to carbonize hydrocarbon in a gas-phase of a reducing atmosphere, etc. A size and form of the carbon nanotube to be obtained change in accordance with the production method, but those in any form can be used.

In the present invention, as the carbon nanotube, those having a fiber diameter of 0.5 to 300 nm, a fiber length of 0.01 to 300 µm, preferably a fiber diameter of 5 to 200 nm and a fiber length of 1 to 200 µm are used. Reasons of using carbon nanotube having a fiber diameter and fiber length in the specific ranges are that conductivity can be given only with a small amount and desorption of carbon nanotube can be suppressed, etc.

A ratio (weight ratio) of the polymer (A) containing an alicyclic structure explained above and the carbon nanotube (B) is 100/0.01 to 100/20, preferably 100/0.1 to 100/10, more preferably 100/0.2 to 100/5 in A/B. When the ratio (weight ratio) of (A) and (B) becomes too large in A/B, the conductivity is liable to decline, while when too small, the workability tends to decline.

Other than the polymer (A) containing an alicyclic structure and the carbon nanotube (B), a resin composition of the present invention may be added with an antioxidant, light stabilizer, ultraviolet ray absorbent, antistatic agent, dispersant, chlorine trapping agent, fire retardant, crystallization nucleating agent, blocking preventer, anti-hazing agent, colorant, organic or inorganic filler other than carbon nanotube, neutralizing agent, lubricant, decomposer, metal inactivator, contamination preventing material, antibacterial agent and other resins, thermoplastic elastomer and other well-known additives in a range of not diminishing the effects of the invention.

As a method of obtaining a resin composition of the present invention, for example, (1) a method of obtaining a pelletized resin composition by mixing a polymer (A) containing an alicyclic structure, carbon nanotube (B) and/or other additives by using a twin screw extruder and a roll kneader, etc. and (2) a method of dissolving a polymer (A) containing an alicyclic structure, carbon nanotube (B) and/or other additives in a suitable solvent, dispersing and coagulating, etc. may be mentioned. When using a twin screw kneader, the result in a molten state is normally extruded to be strands after kneading and cut to be pellets by a pelletizer for use.

A molded article of the present invention is obtained by molding a resin composition of the present invention.

Surface resistance of the molded article of the present invention is preferably 10¹² Ω/□ or less, and more preferably 10⁶ Ω/□ or less. By making the surface resistance of the molded article in the above ranges, generation of static electricity is suppressed and discharge is not caused between the molded article of the present invention and objects held in the molded article or between adjacent objects in the molded article, so that the objects can be protected or adhesion of dust due to charging can be suppressed.

A method of obtaining a molded article of the present invention is not particularly limited and either of a heat-melt molding method and a solution casting method may be used. The heat-melt molding method can be classified further in detail to an extruding molding method, press molding method, inflation molding method, injection molding method, and blow molding method, etc. Also, a shape of the molded article is not particularly limited and may be a variety of forms, such as a spherical shape, stick shape, plate shape, cylinder shape, fiber shape, and film or sheet shape.

Since a molded article of the present invention is excellent in conductivity, low outgassing, heat resistance, and mechanical strength, it is preferable to a variety of uses. For example, a container and wrapping bag for holding a precision substrate, such as a silicon wafer (including a wafer substrate in a processing step of a semiconductor device, such as an integrated circuit chip), mask plate, photomask, magnetic disk plate, liquid crystal display substrate, print substrate; a container and wrapping bag for holding a plate making, such as a precision plate making and electronic plate making; a container and wrapping bag for holding a precision electronic device, such as a hard disk part; a container and wrapping bag for holding a precision optical part, such as a lens and prism; a container and wrapping bag for temporarily keeping a biological device, such as a microchip, in a production process and keeping it before and after producing or processing; syringe, catheter, dialyzer and other medical equipments; a container, piping and tube for fungus culture solution, chemical analysis reagent, washing chemicals used in a semiconductor production process, and liquid crystal etc.; a biological test container for a UV plate, fluorescence plate, phosphorescence plate and DNA chip substrate, etc.; space and aircraft devices; microanalyzer and precision analyzer; a part and chassis for a hard disk drive; a static electricity removing roller and other parts for copy machine and printer; forceps, a pen and driver; a separator for a fuel cell; a conductive layer of a film capacitor; toner; and a conductive paint, etc. may be mentioned. Among them, it is particularly preferable for a container for holding a precision substrate and a biological testing container, etc.

### EXAMPLES

The present invention will be explained further in detail by taking reference examples and examples, but the present invention is not limited to the examples below. Note that "part" and "%" are based on weight unless otherwise mentioned.

Evaluations on the present examples were made by the methods below.

### (1) Molecular Weight

Cyclohexane (toluene when a polymer does not dissolve) is used as a solvent and measurement was made by a gel permeation chromatography (GPC) to obtain weight average molecular weight (Mw) in terms of standard polyisoprene (or polystyrene).

### (2) Glass Transition Temperature (Tg)

Measurement was made by a differential scanning calorimetry method (DSC) based on the JIS-K7121.

### (3) Hydrogenation Rate

The hydrogenation rate of a principal chain and an aromatic ring of a polymer was calculated by measuring ¹H-NMR.

### (4) Surface Resistance Value

Measurement was made at a temperature of 23°C by following the ASTM-D257.

### (5) Bending Strength and Flexural Modulus

Measurement was made at a temperature of 23°C by following the ASTM-D790.

### (6) Tensile Stretch

Measurement was made at a temperature of 23°C by following the ASTM-D638.

### (7) Wear Test

Measurement was made at a temperature of 23°C by following the ASTM-D1044. Note that the abrasion ring was CS17, the load was 500g and the cycle was 1000 times.

### (8) Izod Impact Strength

Measurement was made at a temperature of 23°C by following the ASTM-D256.

### (9) Number of Desorption Particle

After performing ultrasonic cleaning on a molded article in ultrapure water for 5 minutes to clean adhesives on the surface, an injection molding plate having a surface area of 114.3 cm² was put in 300 ml of ultrapure water and put in a shaker for 5 minutes. After that, the result was put in a liquid particle counter to measure the number of particles of 0.5 µm or larger in 10 ml.

### (10) Outgassing

High-purity argon gas airstream heated to 400°C in advance was let into piping for 2 hours, wherein SUS316L-EP tubes having a length of 4000 mm and a nominal diameter of 1/4 inch are connected respectively to both ends of a SUS 316L-EP tube having a length of 200 mm and a nominal diameter of 1/2 inch via a flange, so as to remove moisture and organics adhered on the inner surface. After that, a rectangular shaped test piece having a width of 8 mm, a thickness of 1 mm and a surface area of 100 cm² was inserted to the tube, put in boiled water at 100°C with the entire piping by attaching blank flanges to the both ends. After 300 minutes, a gas inside was continuously collected by connecting a commercially available activated carbon tube to a valve attached to the SUS tube wall and analyzed by a thermal desorption gas chromatography mass spectrometer (hereinafter, referred to as "TDS-GC-MS") to measure an integrating emission amount of organics per 1g of the molded article.

### (11) Melt Index

Measurement was made based on the JIS-K7210 under a condition that a load measurement temperature was 280°C and a measurement load was 2.16 kg.

### [Reference Example 1]

After 500 parts of dehydrated cyclohexane, 0.82 part of 1-hexene, 0.15 part of dibutyl ether and 0.30 part of triisobutyl aluminum were put in a reactor vessel and mixed, 170 parts of tricyclo[4.3.0.1^{2,5}]deca-3,7-diene (dicyclopentadiene: hereinafter, abbreviated as "DCP"), 30 parts of 8-ethylidene-tetracyclo[4.4.0.1^{2,5}.1^{7,10}]-dodeca-3-ene (ethylidene tetracyclo dodecen: hereinafter, abbreviated as "ETD") and 80 parts of hexachloride tungsten (a 0.7% toluene solution) were added continuously over two hours to bring polymerization. The polymerization solution was added with 1.06 parts of dibutyl glycidyl ether and 0.52 part of isopropyl alcohol so as to inactivate a polymerization catalyst and stop the polymerization reaction.

Next, 100 parts of the thus obtained reaction solution containing a ring-opening polymer was added with 270 parts of cyclohexane, furthermore, 5 parts of nickel-alumina catalyst (made by Nikki Chemical Co., Ltd.) as a hydrogenation catalyst, pressurized to 5 MPa by hydrogen, heated to a temperature of 200°C while agitating, then, brought to react for four hours to obtain a reaction solution containing 20% of DCP/ETD ring-opening copolymer hydrogenate. After removing a hydrogenation catalyst by filtration, 0.1 part of hindered phenol based antioxidant (tetrakis[methylene-3-(3,5-di-tert-butyl-4-hydroxyphenyl)propionate]methane) per 100 parts of the hydrogenate was added and dissolved in the obtained solution. Next, by using a cylinder shaped enrichment dryer (made by Hitachi Ltd.), cyclohexane as a catalyst and other volatile compounds were removed from the solution at a temperature of 270°C under a pressure of 1 kPa or less, while the hydrogenate in a molten state was extruded to be strands from an extruder and pelletized after cooling, and the pellets were collected. The ring-opening copolymer hydrogenate had weight average molecular weight (Mw) of 35,000, hydrogenation rate of 99.8%, Tg of 105°C and specific gravity of 1.01.

### [Reference Example 2]

An opening having a diameter of 3 mm and depth of 29 mm was formed from an end of a graphite stick having a diameter of 7 mm and length of 48 mm along the center axis, and mixed powder of rhodium : platinum : graphite = 5:5:2 was filled in the opening to form an anode for producing carbon nanotube. On the other hand, a cathode made by 99.998% pure graphite having a diameter of 14 mm and length of 31 mm was formed. These electrodes were placed in a vacuum chamber, inside the chamber was substituted by a 99.9% purity helium gas, and direct-current arc discharge was performed. A distance between the anode and the cathode was always controlled to be 1 to 2 mm, and discharge was performed under a pressure of 600 torr with a current of 70A. Carbon nanotube generated on the cathode were taken out. Carbon nanotube made by single-layer and multilayer graphite having a fiber diameter of 10 nm (inner diameter of 5 nm and outer diameter of 10 nm) and a fiber length of 1 to 50 µm were obtained.

### Example 1

100 parts of the pellets obtained in the reference example 1 and 1 part of the carbon nanotube obtained in the reference example 2 were kneaded and extruded by a twin screw extruder (TEM-35B made by Toshiba Machine Co., Ltd. The screw diameter was 37 mm, L/D was 32, screw rotation rate was 250 rpm, resin temperature was 210°C and feed rate was 10 kg/hour.) and pelletized. The pellets were subjected to injection molding by using a side gate mold type injection molding apparatus (production number IS450 made by Toshiba Machine Co., Ltd.) to obtain molded articles, such as a plate having a thickness of 1.3 mm, a test piece for bending test and a test piece for Izod impact test. The molding condition was a mold temperature of 80°C, cylinder temperature of 280°C and nozzle temperature of 260°C. Measurement results and evaluation results of the thus obtained molded articles are shown in Table 1.

### Example 2

Other than using the carbon nanotube by an amount of 10 parts, molded articles were obtained in the same way as in the example 1. Measurement results and evaluation results of the obtained molded articles are shown in Table 1.

### Comparative Example 1

Other than using 10 parts of conductive carbon black (ketjen black EC having a particle diameter of 30 nm made by Ketjen Black International Co.) instead of 100 parts of the pellets obtained in the reference example 1 and carbon nanotube, molded articles were obtained in the same way as in the example 1. Measurement results and evaluation results of the obtained molded articles are shown in Table 1.

### Comparative Example 2

Other than using 1 part of conductive carbon black (ketjen black EC having a particle diameter of 30 nm made by Ketjen Black International Co.) instead of the carbon nanotube, molded articles were obtained in the same way as in the example 1. Measurement results and evaluation results of the obtained molded articles are shown in Table 1.

### Comparative Example 3

Other than not using the carbon nanotube obtained in the reference example 2 and only using 100 parts of the pellets obtained in the reference example 1, molded articles were obtained in the same way as in the example 1. Measurement results and evaluation results of the obtained molded articles are shown in Table 1.

### Comparative Example 4

Other than using 100 parts of the pellets obtained in the reference example 1 and using 25 parts of the carbon nanotube obtained in the reference example 2, molded articles were obtained in the same way as in the example 1. Measurement results and evaluation results of the obtained molded articles are shown in Table 1.

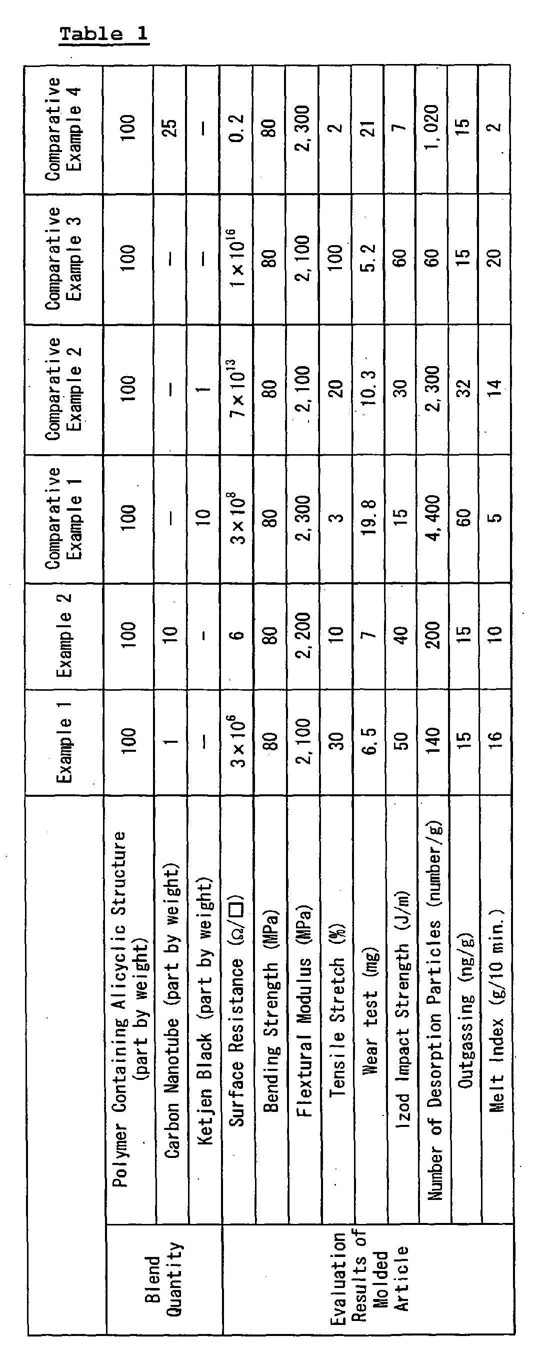

The facts below can be learnt from the results in Table 1. As shown in the examples, it was confirmed that molded articles obtained by molding a resin composition of the present invention (containing a polymer (A) containing an alicyclic structure and carbon nanotube (B) having a fiber diameter of 0.5 to 300 nm and a fiber length of 0.01 to 300 µm, wherein a ratio (weight ratio) of the polymer (A) containing an alicyclic structure and carbon nanotube (B) is 100/0.01 to 100/20 in A/B) were excellent in conductivity, low outgassing, moldability, heat resistance and mechanical strength (tensile stretch, wear test and Izod impact strength), and the number of desorption particles was small.

On the other hand, those added with ketjen black instead of carbon nanotube (the comparative example 1) were confirmed to require a large amount of ketjen black to lower the surface resistance, consequently, the number of desorption particles and outgassing increased and the melt index declined (that is, a decline in moldability). Also, those added with ketjen black instead of carbon nanotube by the same amount as that of the carbon nanotube (the comparative example 2) were confirmed to have insufficient conductivity, moreover, the number of desorption particles and outgassing increased. Those not added with carbon nanotube (the comparative example 3) had insufficient conductivity and the tensile stretch was poor. Those added with a large amount of carbon nanotube (the comparative example 4) were confirmed to cause a large number of desorption particles, and the melt index declined (that is, a decline in moldability).

### Industrial Applicability

A resin composition of the present invention has excellent conductivity and low outgassing while maintaining the preferable characteristics (moldability, heat resistance and mechanical strength) of a polymer containing an alicyclic structure, so that a molded article obtained by molding the same is useful for a variety of use objects, particularly for a container for holding a precision substrate and a biological testing container.

## Claims

1. A resin composition, containing a polymer (A) containing an alicyclic structure and a carbon nanotube (B) having a fiber diameter from 0.5 to 300 nm and a fiber length from 0.01 to 300 µm,
wherein A/B, the ratio (weight ratio) of said polymer (A) containing an alicyclic structure to carbon nanotube (B), is 100/0.01 to 100/20.

2. The resin composition as set forth in claim 1,
wherein said polymer (A) containing an alicyclic structure is a norbornene based polymer.

3. The resin composition as set forth in claim 1,
wherein said polymer (A) containing an alicyclic structure is a hydrogenated ring-opening polymer of a norbornene based monomer.

4. The resin composition as set forth in claim 1,
wherein said polymer (A) containing an alicyclic structure has a glass transition temperature of 60°C or higher.

5. A molded article obtained by molding the resin composition as set forth in any one of claims 1 to 4.

6. The molded article as set forth in claim 5, having surface resistance of 10¹² Ω/□ or less.

7. The molded article as set forth in claim 5, which is a container for holding a precision substrate.

8. The molded article as set forth in claim 5, which is a biological testing vessel.
